# EUROPEAN PATENT SPECIFICATION

(11) **EP 3 114 349 B1**
(45) Date of publication and mention of the grant of the patent: **06.11.2019**
(21) Application number: 15758879.9
(22) Date of filing: 09.03.2015
(51) Int. Cl.: F24T 10/00, F03G 4/00

(54) **PROCESS AND SYSTEM FOR PRODUCING GEOTHERMAL POWER**
VERFAHREN UND SYSTEM ZUR HERSTELLUNG VON GEOTHERMISCHER ENERGIE
PROCÉDÉ ET SYSTÈME DE PRODUCTION D'ÉNERGIE GÉOTHERMIQUE

(30) Priority: 07.03.2014 US 201461966975 P
(43) Date of publication of application: 11.01.2017
(73) Proprietor: Greenfire Energy Inc., Emeryville CA 94608 (US)
(72) Inventor: MUIR, Mark, P., Venice, CA 90291 (US); EASTMAN, Alan, D., Salt Lake City, UT 84121-1264 (US); BALIK, Randy, N., Hermosa Beach, CA90254 (US); MUIR, John, R., Lafayette, CA 94549 (US)
(74) Representative: Osha Liang
(86) International application number: PCT/US2015/019473
(87) International publication number: WO 2015/134974

(56) References cited:
- EP-A1- 2 365 027
- DE-B3-102005 036 472
- US-A1- 2010 077 752
- US-A1- 2011 041 500
- US-A1- 2011 048 005
- US-A1- 2011 100 002
- US-A1- 2011 120 666
- US-A1- 2012 144 829
- US-A1- 2012 174 581
- US-A1- 2013 062 890
- US-B1- 6 668 554

## Description

### BACKGROUND

A central paradox of the power generation field is that, although potential geothermal power is at least an order of magnitude greater than all fossil fuels combined, in practice geothermal power comprises only about 1% of the global energy portfolio. Conventional geothermal power utilizes geothermally-heated water to drive a turbine which produces electricity. However, comparatively few places on earth offer the right combination of heat, water and rock permeability to make geothermal power production cost efficient, accounting for the disparity between potential and actual geothermal electrical power production.

To remedy the scarcity of natural geothermal sites, about USD $1B have been spent over the last 40 years to develop the technology for "Enhanced Geothermal Systems" (EGS). EGS requires natural heat and ready availability of water, but uses pressure-shearing technology to create ("engineer") a permeable reservoir in dry rock. The permeability must produce sufficient flow of heat-carrying water through the rock structure to mimic a natural geothermal site.

While steady progress is being made, EGS is still only on the border of being cost-competitive with other forms of power generation. The core problem is the difficulty of creating a sufficient flow of hot water, from an injection well through the rock structure, then out a production well. Because the heat transfer coefficient of rock formations is generally low, the water must be forced through a series of small cracks in the fractured zone to maximize the surface area from which the requisite heat can be drawn. That process requires large pumps to force the water down through the injection well and through the hot rock formation, and then additional pumps to lift the heated water to the surface for power generation. The pumping is itself energy-intensive and imposes a significant parasitic penalty on overall power output.

Closed-loop systems are quite common in ground-source heat pump (GSHP) geothermal applications for heating and cooling buildings around the world. In general, either a vertical well is drilled and pipes run down the bore, or a system of coils is laid in a horizontal excavation near the building in question. If there is a suitable nearby pond or lake, the coils may be laid in the body of water. In all applications of GSHPs, the subsurface circulating piping is very shallow and the end use is highly-localized direct heating and cooling. Since GSHPs in general do not produce electrical power as their primary product, they do not have turbines or pseudo-turbine devices as part of their design.

There has to date been little use of closed-loop geothermal methods for electrical power production. Several factors are likely to be the cause of this relative inaction. For example, in order to get good heat transfer between the fluid in closed-loop tubing and the surrounding rock or fluid, the tube diameter must be relatively small. However, for water as the heat transfer fluid, a significant pressure drop results, which requires pumping at high pressure. This parasitic load on the system is detrimental to overall project economics. Further, the smaller tubing required for good heat transfer also decreases the amount of water that can be passed through the tubing, requiring either many small tubes (with concomitant increase in drilling costs) or much higher pressures through the system, resulting in increased costs for pumping, and perhaps even for the piping itself, to withstand the increased pressure.

Several approaches have been attempted to solve these and other problems. For example, various geothermal methods are disclosed in U.S. Patent and U.S. Patent Publication Nos. 20110048005, 7059131, 20110067399, 20120144829, 20130192816, 20120174581, 20100180593, and 20070245729, among others. In particular, US20120174581 A1 is directed to a pipe system defining a closed-loop fluid conduit configured to circulate a fluid into a cased well and through at least a portion of a subterranean thermal reservoir to heat the fluid. US20120174581 A1 is also directed to a thermal power system. Nonetheless, geothermal production of power remains, in large part, uneconomic.

### SUMMARY OF THE DISCLOSURE

In one aspect, embodiments disclosed herein relate to a process for producing power. The process may include injecting a first heat transfer fluid through an injection well to a geothermally-heated formation that contains a second heat transfer fluid. The first heat transfer fluid may then be heated via indirect heat exchange in an interwell run fluidly connected to the injection well and disposed within the geothermally-heated formation. The heated first heat transfer fluid may then be recovered through a production well fluidly connected to the interwell run. Thermal energy contained in the recovered heated first heat transfer fluid may then be converted in a power production unit fluidly connected to the injection well and the production well. The process further comprises drilling a first borehole, from the earth's surface to a first depth within the geothermally-heated formation, for the injection well, drilling a second borehole, from the earth's surface to a second depth, for the production well, drilling an interwell borehole connecting the first borehole and the second borehole, disposing casing or pipe within the interwell borehole, perforating the interwell casing or pipe, and disposing one or more fluid conduits within the interwell casing or pipe, the fluid conduits fluidly connecting the injection well and the production well.

In another aspect, embodiments disclosed herein relate to a system for producing power. The system may include: an injection well and a production well for conveying a first heat transfer fluid to and from a geothermally-heated formation containing a second heat transfer fluid. The system may also include an interwell run fluidly connecting the injection well to the production well and fluidly isolating the first heat transfer fluid from the second heat transfer fluid. The interwell run is disposed in the geothermally-heated formation containing the second heat transfer fluid such that the first heat transfer fluid is indirectly heated by the geothermally-heated formation and the second heat transfer fluid. A power production unit is also provided, configured to produce power from the heated first heat transfer fluid. The interwell run comprises a plurality of fluid conduits disposed within a perforated casing or pipe.

Other aspects and advantages will be apparent from the following description and the appended claims.

### BRIEF DESCRIPTION OF DRAWINGS

Figure 1 is a simplified flow diagram of a power production system according to embodiments herein.
Figure 2 is a cross-sectional view of a perforated interwell run according to embodiments herein.
Figure 3 is a simplified flow diagram of a power production system including multiple power production units according to embodiments herein.
Figure 4 is a simplified flow diagram of a power production system including multiple power production units according to embodiments herein.

### DETAILED DESCRIPTION

Embodiments disclosed herein relate to systems and methods for producing geothermal power. More specifically, embodiments disclosed herein relate to systems and methods for producing electrical power using closed-loop systems that advantageously use supercritical heat transfer fluids indirectly heated via conduction, convection, and advection within a geothermally-heated formation.

Geothermal power systems according to embodiments herein may include a well system that runs through a geologic formation. The permeability in this formation may be naturally occurring or it may be enhanced using a range of technologies, such as hydraulic fracturing, pressure shearing, explosive charges, acidification or thermal shearing.

The geologic formation contains geothermal heat and a formation fluid (i.e., a first heat transfer medium or heat transfer fluid) to transfer that heat via indirect heat exchange to a circulating fluid, a second heat transfer medium or fluid circulating through the well system. The formation fluid may include water, brine, or hydrocarbons, or mixtures thereof. In some embodiments, the formation fluid is water or brine. In other embodiments, the formation fluid is a liquid hydrocarbon or mixture of liquid hydrocarbons, including natural gas. The hydrocarbons may be liquid under formation temperature and pressure conditions.

The formation fluid contained in the geologic formation may be naturally occurring, or already present in the formation, in some embodiments. In other embodiments, the formation fluid may be added to the geologic formation, such as by injection into the geothermally-heated formation via one or more wells.

The permeable geothermally-heated formation, including the formation fluid contained in the formation, may be at a temperature in the range from about 100°C to about 500°C. In some embodiments, the formation and formation fluid may be at a temperature in the range from about 150°C to about 350°C.

The well system may include an injection well and a production well, either of which may have been vertically or directionally drilled. It may also include an additional well that connects the injection well with the production well to form one continuous well system that allows a second heat transfer fluid to circulate without exposure to groundwater or rock outside the system. This third well, which may be termed the "interwell run," is generally disposed within the geothermally-heated formation containing the formation fluid. The entire length of the interwell run does not need to be within the geothermally-heated formation or under a level of the formation fluid, but in some embodiments the interwell run is fully within the geothermally-heated formation. Although described above as three separate wells, systems according to embodiments herein may be formed via a single well, such as a single directionally-drilled well or multiple wells. For example, it may be possible with coiled-tube drilling to complete a u-shaped system end to end. Alternatively, coiled tubing or other material could be inserted through the injection well and interwell, and then drawn up through the production well to complete a circuit.

During operation, the second heat transfer fluid is circulated down the injection well and through the interwell run. In the interwell run, as well as a lower portion of the injection well, the second heat transfer fluid is heated via indirect heat exchange with heat from the geothermally-heated formation as well as the formation fluid contained therein. In this manner, the indirect heat exchange may include heat energy conducted from the formation itself as well as heat energy from the formation fluid, which may be brought to the interwell run by convection and advection, for example. In this manner, the system is disposed in locations where at least one permeable formation exists, and in which the formation fluid is geothermally heated, the heat of which is then transferred to the vicinity of the piping system by convection or advection. The net effect is that energy is always available and constantly replenished by natural flow within the formation.

After the second heat transfer medium is heated within the interwell run, the second heat transfer medium is carried to the surface by a production well. The heated second heat transfer fluid is then provided to a power production unit to convert the thermal energy contained in it to power in a power production unit fluidly connected to both the injection well and the production well. In some embodiments, the production well conveying the heated second heat transfer fluid may be insulated to prevent heat loss to the surrounding geologic formation or air. The power production unit may include one or more of a turbine, a turbine and generator, a CO2 turbine, a pseudo-turbine, including those that derive electrical or mechanical power from linear or non-linear motion, a heat exchanger in a Rankine cycle power generation system, Brayton cycle turbines, or any other mechanism producing useful work or power from heat. Following conversion of the energy contained in the second heat transfer fluid, the second heat transfer fluid may be forwarded from the power production unit to the injection well to restart the cycle.

Overall, systems for producing power according to embodiments disclosed herein may thus include a closed-loop system for circulating the second heat transfer fluid through an injection well, an interwell run, a production well, and a power production unit. The heat transfer fluid circulating through the system may include one or more of carbon dioxide, nitrogen, ammonia and/or amines with carbon number C₁ through C₆, hydrocarbons with carbon number C₁ through C₈, hydrocarbons with carbon number C₁ through C₁₀ with one or more hydrogens being replaced by chlorine or fluorine. In some embodiments, the circulating fluid is supercritical carbon dioxide.

The system may also include valves, controls, and other components to control operation of the system. In some embodiments, the system may include pumps for circulating the second heat transfer fluid through the well system. In other embodiments, the circulation of the second heat transfer fluid through the well system may partially or completely result from a density gradient in the circulating fluid. This form of circulation is commonly known as a "thermosiphon." Where thermosiphon circulation is anticipated, the system may include one or more start-up pumps to initially supply and pressurize the circulating heat transfer fluid.

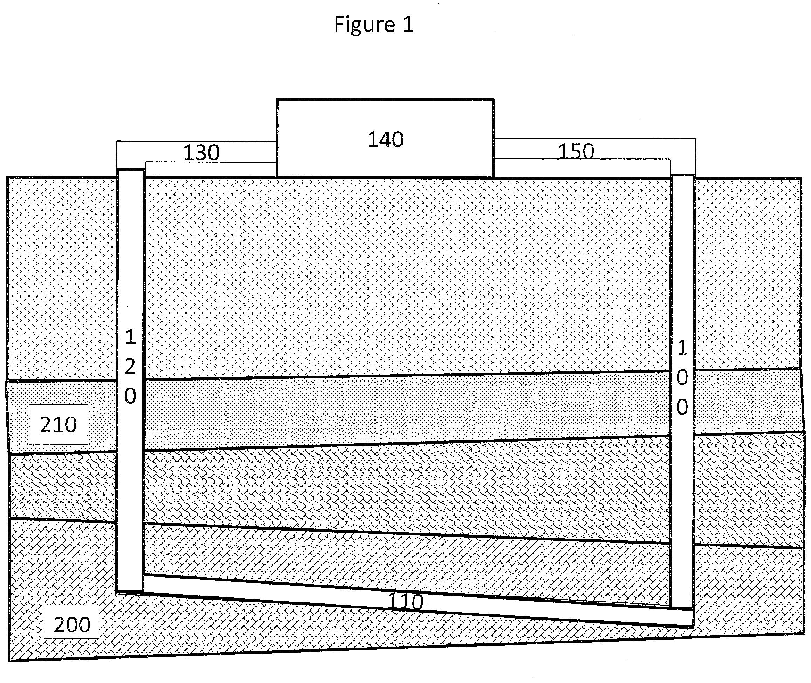

Referring now to Figure 1, a simplified flow diagram of a power production system according to embodiments herein is illustrated. The power production system includes an injection well 100, which may be a single injection well or a network of injection wells extending from the earth's surface underground to a geothermally heated formation 200. The power production system also includes a production well 120, which may be a single production well or a network of production wells extending from the earth's surface underground.

A lower end of injection well 100 is fluidly coupled to a first end of an interwell run 110, disposed partially or wholly within a geothermally heated formation 200 containing a heat transfer fluid disposed within the pores and interstitial spaces of the formation, and which may move within the formation via convection and/or advection. A lower end of production well 120 is fluidly coupled to a second end of interwell run 110.

An upper end of injection well 100 and production well 120 are fluidly coupled via conduits 150, 130, respectively, each respectively coupled to a power production unit 140. Conduits 150, 130 may include pumping, piping and control systems (not shown) necessary to connect the production and injection wells 120, 100 to power production unit 140, as well as to control the injection and recovery of circulating fluid.

Injection well 100 may be emplaced via drilling a borehole to a first depth within the geothermally-heated formation. The borehole may be cased and cemented in some embodiments. Likewise, production well 120 may be emplaced via drilling a borehole to a second depth within the geothermally-heated formation, where the second depth may be the same or different than the depth of the injection well. The production borehole may also be cased and cemented in some embodiments. In some embodiments, the depth of the lower end of the production borehole is less than a depth of the injection borehole.

Interwell run 110 may also be emplaced via drilling of a borehole. Interwell run 110 may be a continuation of one or both injection well 100 and production well 110, or may be a separately drilled borehole. Interwell run 110 may also be a cased borehole.

In some embodiments interwell run 110 may be emplaced via directional drilling. Although illustrated as a relatively straight run, interwell run 110 may include various changes in elevation or direction to remain within a formation fluid containing strata. In other embodiments, the interwell run 110 may be configured to traverse through the geothermally heated formation in a manner such that the circulating fluid encounters increasing formation temperatures along the interwell run 110 from injection well 100 to production well 120 (i.e., akin to counter current heat exchange), taking advantage of naturally occurring temperature gradients within the formation.

In some embodiments, interwell run 110 may be disposed horizontally, where a depth of injection well 100 is approximately the same as production well 120. In other embodiments, interwell run may be disposed at an angle relative to horizontal, such as ranging from +/- 75 degrees from horizontal.

The interwell run 110 may be a single pipe or may include multiple pipes fluidly connecting the injection well 100 to the production well 120. The pipes may be formed from steel or other metals, including corrosion resistant steels, or may be formed from thermoplastics, rubber, or elastomers, including steel-reinforced pipe. The type of material used may depend on the formation fluid, the conditions within the geothermally-heated formation (temperature, pressure, etc.), the circulating fluid, and the overall length or surface area of the heating section. For example, a relatively short interwell run may require a highly conductive material, whereas a longer piping run may permit use of less conductive materials to convey the circulating fluid.

In the system as illustrated in Figure 1, flow of the circulating fluid proceeds in a clockwise manner, from the injection well(s) 100 through the interwell run 110, where the circulating fluid is heated via indirect heat exchange with the formation and the surrounding heat transfer medium (formation fluid), through the production well(s) 120, through the transfer line 130, and into the power production unit 140, where energy in forms of heat and/or pressure from the now geothermally heated heat-transfer fluid (circulating fluid) is converted to electrical power or other useful work. The heat-transfer fluid is then conveyed via transfer line 150 from the power production unit to the injection well, where the cycle recommences.

The transfer lines 130, 150 may be as long or short as necessary to connect the injection and production wells to the power production unit. It is envisioned that in some embodiments, directional drilling for both the injection and production wells could be initiated from the location of the power production unit, making the transfer lines only a few feet long.

As noted above, interwell run 110 may increase and/or decrease in elevation as it traverses the geothermally heated formation from injection well 100 to production well 120. Circulating fluids herein may be maintained at or above the critical point (i.e., above both the critical pressure and critical temperature) at all points within the cycle. As a result, pulse flow, or adjacent pockets of higher and lower density circulating fluid, is not formed, even where elevation changes are significant. Operating above the critical point of the circulating fluid or circulating fluid mixture according to embodiments herein thus advantageously allows geothermal power production in formations or at locations that would otherwise not be suitable for power production.

In some embodiments, the second heat-transfer medium circulating through the well system is supercritical carbon dioxide, sCO2. Supercritical carbon dioxide has several advantages over water as a heat-transfer fluid. For example, the density of sCO2 can change rapidly with temperature. This change of density can result in the onset of a density siphon, also called a thermosiphon, which makes the sCO2 circulate through the well system with little or no mechanical pumping, except perhaps during system startup. Moreover, sCO2 turbines can be more efficient than steam turbines at equivalent pressures, temperatures, and flow rates, and advantageously are significantly smaller in mass than a comparable output steam turbine. Both these effects increase the utility of the system compared to similar closed-loop systems using water as the heat-transfer medium.

The diameters of the injection well 100, interwell run 110, and production well 120 may be the same or different. In some embodiments, the diameter of production well 120 may be greater than that of interwell run 110, which may allow for lower heat loss from the circulating heat transfer fluid in production well 120. Heat losses may also be abated by insulating production well 120 and surface transfer lines 130. In other embodiments, production well 120 may be a smaller diameter than injection well 100. The diameters of the respective sections may depend upon circulating fluid flow rate, pressure drop limitations, formation temperature, desired temperature rise of the circulating fluid, as well as temperature losses that may result from decreases in pressure.

In other embodiments, the diameter of the injection well may be less than a diameter of both the interwell run and the production well. In yet other embodiments, the diameter of the production well and interwell run may decrease stepwise with respect to increasing distance from surface to the point of intersection with the injection well. Changes in diameter may advantageously induce some turbulence within the interwell run, improving heat transfer to the supercritical circulating fluid. In other embodiments, one or more turbulence inducing devices may be disposed within the interwell run to enhance heat transfer to the circulating fluid; while overall pressure drop through the system is a concern, the use of supercritical circulating fluids would not have a significant pressure drop through such devices. Accordingly, the benefits of increased heat transfer may outweigh the negatives of a slight pressure drop.

As illustrated in Figure 1, a single interwell run interconnects injection well 100 with production well 120. In some embodiments, two or more interwell runs 110 may be used to fluidly connect injection well 100 with production well 120. The multiple interwell runs 110 may be at the same elevation, may be at different elevations or trajectories within a single strata, or may be at different elevations within different strata containing a formation fluid, which may be the same or different. For example, a second interwell run (not illustrated) may be disposed within strata 210 fluidly connecting injection well 100 with production well 120. Multiple injection wells 100 and interwell runs 110 may also be used to provide heated circulating fluid to a common production well 120.

Interwell run 110, as illustrated in Figure 1, may be a single pipe or casing run fluidly isolating the circulating fluid from the formation. Although the heat transfer from the formation fluid was described above as having energy constantly replenished by natural flow within the formation, embodiments herein contemplate stimulating flow of the formation fluid proximate the interwell run to enhance the heat transfer. In some embodiments, the formation proximate the interwell run 110 may be stimulated to improve flow of formation fluids around the interwell run. For example, the formation around the interwell run may be fractured, such as by using explosives or hydraulic fracturing, propellant stimulations, acidification, etc. As another example, a draft well may be used to impart a flow of formation fluids within the formation proximate the interwell run; as inducing only a portion of the flow that would normally be used when pumping a heat transfer fluid through a formation for direct heat transfer, energy losses to pumping may be acceptable compared to the improvements in heat transfer to the circulating fluid. Other methods of stimulating the flow of fluids proximate the interwell run may also be used.

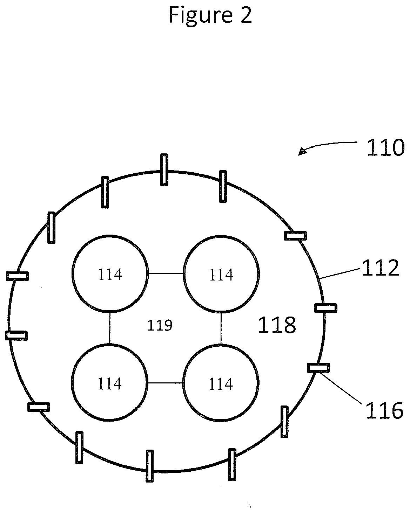

According to the disclosure, such as illustrated in Figure 2, interwell run 110 may include a perforated casing 112 and one or more flow conduits 114 (tubes or pipes 114) disposed within the perforated casing and fluidly isolating the circulating fluid from the formation. At the terminal ends of the interwell run 110, the individual wells 114 may be divided or consolidated, respectively, in a header associated with or disposed within the injection well 100 and production well 120.

The perforated casing 112 may allow flow of formation fluid through perforations 116 into and out of annular space 118. The void volume within annular space 118 may be significantly greater than that of the surrounding formation, allowing increased circulation of the formation fluid proximate heat transfer conduits, improving the convective, advective, and/or conductive heat transfer from the formation fluid to the circulating fluid. The perforation of the external well may be performed by any convenient method, such as shaped explosive charges used in oil or gas well completion.

If a plurality of tubing or hose is employed, that tubing or hose may be inserted into the perforated pipe either individually or as a bundle with wrapping to hold the grouping of pipes, tubing, or hoses together. For example, the plurality of smaller tubing disposed within the perforated section may include two or more tubes or hoses wrapped together in a spiral fashion, and held together by an exterior wrapping element. In some embodiments, the wrapping element may be configured to dissolve within the formation fluid or at formation temperatures, allowing the two or more tubes or hoses to separate after installation, thus exposing additional surface area for desired heat transfer. In other embodiments, the two or more tubes or hoses may be coupled via one or more spacing elements 119 to aid in installation while minimizing loss in exposed surface area.

It is noted that perforation of the interwell run 110, disposing of the interior flow conduits 114, and sealing of the injection and production wells 110 to fluidly isolate the circulating fluid from the formation fluid may increase system installation costs. However, the enhanced heat transfer that may result from the increased circulation of the formation fluid within annular space 118, as well as may result from the increased heat exchange surface area with multiple pipes of smaller diameter, may significantly outweigh the additional costs. In some embodiments, for example, the enhanced heat transfer may allow for use of a significantly shorter interwell run, which may not only decrease installation costs, but may also improve directional drilling accuracy when connecting the injection well with the production well.

The overall length of interwell run 110, as noted above, may depend upon several factors. For example, the length required for a desired temperature rise in circulating fluid may depend upon the temperature and available heat within the geothermally heated formation, the materials of construction of the heat exchange pipe (the interwell run or tubes disposed therein), total heat exchange surface area per unit length, the formation fluid and properties of the formation (conductivity, permeability, porosity, etc.), and circulating fluid properties (flow rates, heat exchange coefficients, pressure, etc.), among other factors. Although embodiments described herein may enhance the heat transfer efficiency, in some embodiments the required length of the interwell run may be greater than 1 km, greater than 2 km, or even greater than 5 km.

As the length of the interwell run increases, the required length of transfer piping to convey the circulating fluid from a power production unit to the injection well increases proportionally. In order to minimize piping above the surface or placed minimally below the surface, one or both of the injection and production wells may be directional wells (i.e., not vertical), such that the surface ends are located proximate a power production unit, and the subsurface ends diverge from the power production unit to provide for an interwell run of sufficient length.

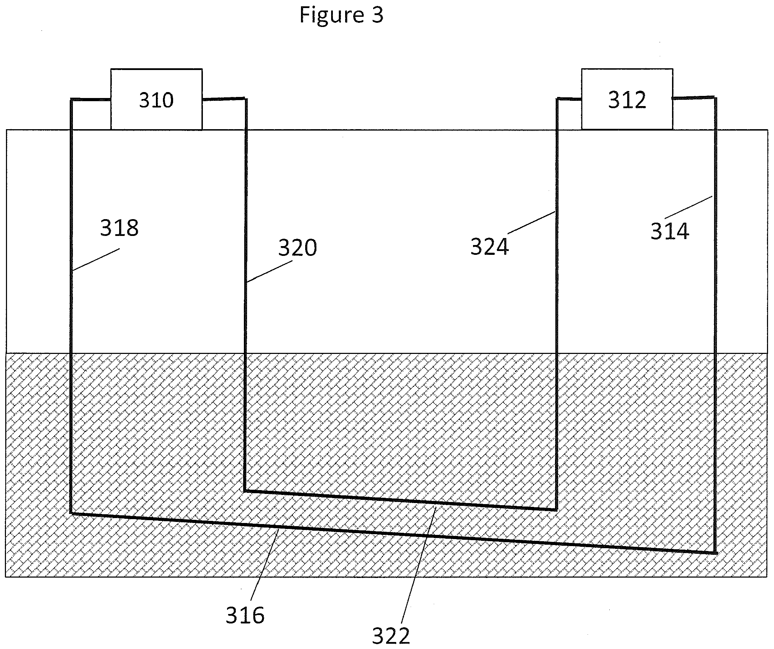

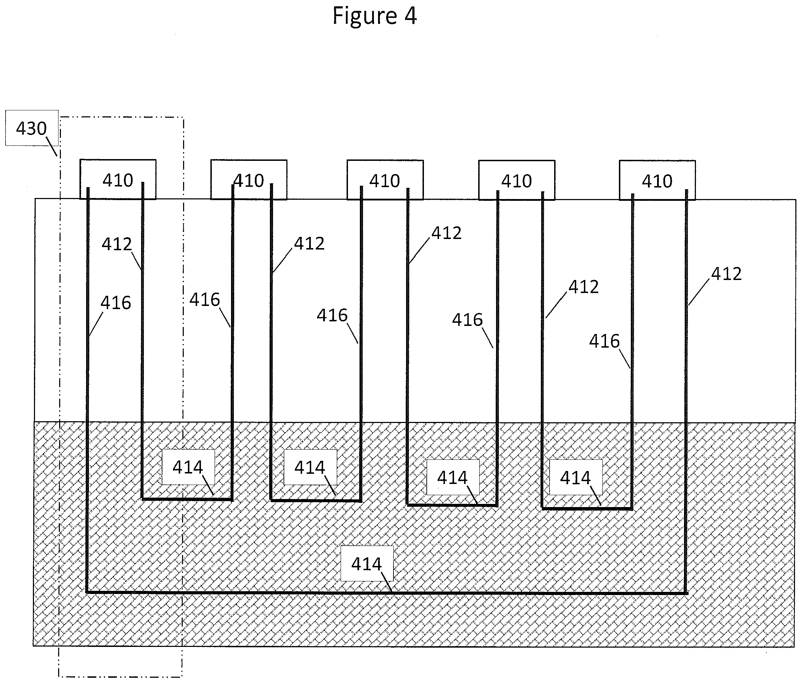

Figures 3 and 4 illustrate alternative embodiments to effectively minimize transfer piping distances, where two or more power production units may be connected in series. As illustrated in Figure 3, two power production units 310, 312 may be connected in series. Circulating fluid may be introduced from power production unit 312 into injection well 314 to be heated in interwell run 316. The heated circulating fluid may then be recovered in production well 318 and transferred to power production unit 310 for generating power. Following power production, the depleted circulating fluid may be passed from power production unit 310 into injection well 320 to be heated in interwell run 322. The heated circulation fluid may then be recovered in production well 324 and transferred to power production unit 312 for generating power.

Although interwell run 322 is illustrated in Figure 3 as significantly shorter than interwell run 316, the actual lengths may be similar, as the Figures are not to scale and do not accurately portray the 3-dimensional system. Thus, power production from each of production units 310, 312 may be similar. Where minor or significant differences in lengths do result, other system variables may be adjusted to result in similar power production profiles. For example, a shorter interwell run 316 may be disposed at a depth greater than a longer interwell run 322 such that it may be exposed to higher formation and formation fluid temperatures, thus achieving a similar circulating fluid output profile. Alternatively, the power generation may be varied between power production units. For example, a first power production unit 312 may be configured with a CO2 turbine for producing 10 MW of electricity, whereas the second power production unit 310 may be configured with multiple CO2 turbines for producing 20 MW of electricity, where an additional interwell run length provides for the increased power generation. Design of the interwell runs may be adjusted to effectively utilize commercially available turbines, regardless of size, and advantageously exploit their tolerance for being operated at essentially any increment of their rated capacity. For the multiple power production unit circuit as illustrated in Figure 3, the interwell runs may be at similar or different orientations and elevations, use similar or different materials of construction, or may include similar or different heat transfer networks, such as where one includes a perforated interwell run and the other does not.

As illustrated in the embodiment of Figure 4, multiple power production units 410 may be connected in series. Circulating fluid passed to an injection well 412 from one power production unit is heated in an interwell run 414 and recovered in a production well 416 providing the heated circulating fluid to a second power production unit. The sequence described may be repeated numerous times, so as to have a plurality of injection wells, power production units, and production wells. There may be as many replications of the repeating unit 430 as desired or feasible to be used with the geothermally heated formation.

For the multiple power production unit circuit as illustrated in Figure 4, similar to that described for Figure 3, the interwell runs may be at similar or different orientations and elevations, use similar or different materials of construction, or may include similar or different heat transfer networks, such as where one includes a perforated interwell run and the other does not. The use of different elevations and orientations may allow for improved capture of available heat from the formation. In some embodiments, networked well systems according to embodiments herein may be configured to capture greater than 20% of the heat available in the geothermal resource over a 30 year operating period, such as greater than 25% in other embodiments.

In addition to minimizing surface pipe runs, the embodiments of Figures 3 and 4 may also provide flexibility with respect to power generation. Demand for electricity cycles from periods of high demand to periods of low demand, such as may result from an increased demand to power air conditioners during hotter daytime hours for example. The loop systems illustrated in Figures 3 and 4 may provide for a network of smaller turbines and generators, thus allowing for managed output. For example, piping and valving may be provided to bypass a portion of the circulating fluid around a power production unit, resulting in a corresponding decrease in power output from the power production unit. Alternatively or additionally, piping and valving may be provided to completely bypass the circulating fluid around a power production unit.

To avoid an undesired increase in circulating fluid temperatures when partially or completely bypassing a power production unit, expanders, chillers, heat exchange units, or other devices for withdrawing a portion of the heat from the circulating fluid without producing power may be provided. Flow rates and other variables may also be adjusted to decrease the amount of energy withdrawn from the geothermally heated formation. For example, for an interwell run including a perforated pipe including four internal heat exchange pipes (114 in Figure 2), flow through one or more of the pipes may be restricted, such as by a valve, thereby increasing the flow rate of circulating fluid through that section and eliminating 25 percent, 50 percent, or 75 percent of the heat exchange area, resulting in a decrease in energy withdrawn from the formation through that section of interwell piping. Following bypass or partial bypass of the next power production unit, the next interwell run may be configured to provide the necessary energy, such as by similar valving configurations, for power production at the ensuing power production unit. In other embodiments, such as where multiple interwell runs are required to provide energy to a turbine, one or more of these lines may be shunted to adjust the rate of flow and the resulting power output. In this manner, a power production unit may be taken off line, such as for maintenance or to provide a managed power output from the loop system to meet demand cycles.

The loop systems of Figures 3 and 4 may thus provide for power production flexibility, resulting in a unique combination of predictable baseload power capacity and responsive, flexible power turndown ratios capable to reduce power output by a substantial percentage in a short period of time, such as 5-, 15-, or 60-minute intervals. The loop systems additionally minimize the surface exposure or footprint of near-surface or above-surface transfer piping, and have low or no emissions, minimal or no water consumption, and other attractive attributes. The flexibility to capture high revenue power generation when available while providing significant turndown differentiates the loop system from other renewable energy systems currently contemplated or available.

As described above, embodiments disclosed herein provide for efficient power generation via geothermal heating of a heat transfer fluid circulating through a piping system fluidly isolated from the geothermal formation. The circulating fluid is a supercritical fluid, and in some embodiments may be supercritical carbon dioxide. Supercritical carbon dioxide (sCO2) has many advantages over other heat transfer fluids, such as water, including: 1) sCO2 has much lower viscosity than water and can move through smaller diameter pipes and tubing more easily, thus removing more heat in the same time, even though the heat capacity of sCO2 is lower than that of water, and 2) density differentials due to the difference in temperature between the injection and production sides of the system will create a thermosiphon that moves sCO2 through the system with limited or no need for pumps and the associated parasitic power loss. A third important advantage of sCO2 is that CO₂ is much less reactive with most formation minerals than water; nevertheless, any CO₂ leakage through the loop system may react with some formation minerals over time, which in the worst case can cause plugging of formation permeability by carbonates formed by reaction of certain formation minerals with CO₂. As an additional advantage, sCO2 can drive turbines at greater efficiency than water.

The prevailing opinion has been that sCO2 geothermal power production is best suited for hot dry rock where there are few fissures that would allow sCO2 to essentially be lost in the formation. This, coupled with water contamination and formation plugging, has hampered development of sCO2 geothermal power production. As described above, however, embodiments of power generation systems disclosed herein address issues related to supercritical fluid losses and water contamination, and advantageously use sCO2 or other supercritical fluids to produce energy from a geothermally heated formation containing a formation fluid, thus improving upon both performance and economics. Also, by containing the supercritical fluid, such as sCO2, in a closed system, contamination by water or minerals is avoided, preventing corrosion and mineral buildup in the power generation equipment.

Embodiments disclosed herein may economically use smaller heat resources than conventional projects, which typically require a minimum of 25 MW capacities. Further, because heat is the only natural requirement, systems disclosed herein are inherently less risky than hydrothermal wells, which must intersect heat, water, and large permeability simultaneously. Embodiments herein also provide for incremental growth in power output, such as in about 10 MW steps.

Embodiments disclosed herein may also be used to recue failed projects or wells, which generally have sufficient heat but lack sufficient permeability for fluid flow, are underperforming the contractual power output, or have high rates of corrosion, deposit buildup, or toxic materials in the water. These failed systems may be retrofitted to incorporate features of embodiments herein, such as via modification or inclusion of an interwell run to improve heat transfer efficiency, for example a perforated interwell run.

Embodiments disclosed herein additionally advantageously provide for effective and efficient power output management. Systems disclosed herein may be readily turned down to adjust power output to meet demand cycles. Other advantages of systems disclosed herein are alluded to above or would be readily apparent to one skilled in the art based on the above description.

While the disclosure includes a limited number of embodiments, those skilled in the art, having benefit of this disclosure, will appreciate that other embodiments may be devised which do not depart from the scope of the present disclosure. Accordingly, the scope should be limited only by the attached claims.

## Claims

1. A process for producing power, comprising:
injecting a first heat transfer fluid through an injection well (100) to a geothermally-heated formation (200) that contains a second heat transfer fluid;
heating the first heat transfer fluid via indirect heat exchange in an interwell run (110) fluidly connected to the injection well (100) and disposed within the geothermally-heated formation (200);
recovering the heated first heat transfer fluid through a production well (120) fluidly connected to the interwell run (110); and
converting thermal energy contained in the recovered heated first heat transfer fluid in a power production unit (140) fluidly connected to the injection well (100) and the production well (120);
wherein the process further comprises:
drilling a first borehole, from the earth's surface to a first depth within the geothermally-heated formation (200), for the injection well (100);
drilling a second borehole, from the earth's surface to a second depth, for the production well (140);
drilling an interwell borehole connecting the first borehole and the second borehole;
**characterised in that** the process comprises disposing casing or a pipe (112) within the interwell borehole;
perforating the interwell casing or pipe (112); and
disposing one or more fluid conduits (114) within the interwell casing or pipe, the fluid conduits (114) fluidly connecting the injection well (100) and the production well (120).

2. The process of claim 1, wherein the second depth is less than the first depth, and wherein the interwell borehole is drilled at an angle of less than 70 degrees with respect to horizontal.

3. The process of claim 1, wherein
the first heat transfer fluid comprises one or more of carbon dioxide, nitrogen, ammonia and/or amines with carbon number C₁ through C₆, hydrocarbons with carbon number C₁ through C₈, hydrocarbons with carbon number C₁ through C₁₀ with one or more hydrogens being replaced by chlorine or fluorine; and
wherein the second heat transfer fluid comprises water, brine, or hydrocarbons that may be liquid under formation temperature and pressure conditions.

4. The process of claim 1, further comprising stimulating a flow of the second heat transfer fluid within the geothermally-heated formation (200).

5. The process of claim 1, further comprising maintaining the first heat transfer fluid as a super critical fluid throughout the power production cycle, including injection through the injection well (100), heating within the interwell pipe, recovery through the production well (120), power production in the power production unit (140), and reinjection into the injection well (100).

6. A system for producing power, comprising:
an injection well (100) and a production well (120) for conveying a first heat transfer fluid to and from a geothermally-heated formation (200) containing a second heat transfer fluid;
an interwell run (110) fluidly connecting the injection well (100) to the production well (120) and fluidly isolating the first heat transfer fluid from the second heat transfer fluid, wherein the interwell run (110) is disposed in the geothermally-heated formation (200) containing the second heat transfer fluid such that the first heat transfer fluid is indirectly heated by the geothermally-heated formation (200) and the second heat transfer fluid; and
a power production unit (140) configured to produce power from the heated first heat transfer fluid, **characterised in that** the interwell run (110) comprises a plurality of fluid conduits (114) disposed within a perforated casing or pipe (112).

7. The system of claim 6, wherein the circulating is performed without mechanical pumping.

8. The system of claim 6, wherein
the first heat transfer fluid comprises one or more of carbon dioxide, nitrogen, ammonia and/or amines with carbon number C₁ through C₆, hydrocarbons with carbon number C₁ through C₈, hydrocarbons with carbon number C₁ through C₁₀ with one or more hydrogens being replaced by chlorine or fluorine; and
wherein the second heat transfer fluid comprises water, brine, or hydrocarbons that may be liquid under formation temperature and pressure conditions.

9. The system of claim 6, wherein the interwell run (110) extends through said geothermally-heated formation at an angle ranging ±70° from horizontal.

10. The system of claim 6, comprising two or more injection wells (314, 320; 412), two or more production wells (318, 324; 416), and two or more power production units (310, 312; 410), wherein the power production units (310, 312; 410) are fluidly coupled via an injection well (314, 320; 412), an interwell run (316, 322; 414), and a production well (318, 324; 416).

11. The system of claim 10, further comprising valving and controls configured to fluidly isolate one or more power production units (310, 312; 410).

## Patentansprüche

1. Verfahren zur Energieerzeugung, umfassend:
Einspeisen eines ersten Wärmeübertragungsfluids durch einen Einspeiseschacht (100) in eine geothermisch erwärmte Formation (200), die ein zweites Wärmeübertragungsfluid enthält;
Erwärmen des ersten Wärmeübertragungsfluids über indirekten Wärmeaustausch in einer Interschacht-Durchführung (110), die strömungsmäßig mit dem Einspeiseschacht (100) verbunden und innerhalb der geothermisch erwärmten Formation (200) angeordnet ist;
Zurückgewinnen des erwärmten ersten Wärmeübertragungsfluids über einen Förderschacht (120), der strömungsmäßig mit der Interschacht-Durchführung (110) verbunden ist; und Umwandeln von in dem zurückgewonnenen erwärmten ersten Wärmeübertragungsfluid enthaltener Energie in einer Energieerzeugungseinheit (140), die strömungsmäßig mit dem Einspeiseschacht (100) und dem Förderschacht (120) verbunden ist;
wobei das Verfahren des Weiteren umfasst:
Abteufen einer ersten Bohrung von der Erdoberfläche bis zu einer ersten Teufe innerhalb der geothermisch erwärmten Formation (200) für den Einspeiseschacht (100);
Abteufen einer zweiten Bohrung von der Erdoberfläche bis zu einer zweiten Teufe für den Förderschacht (140);
Abteufen einer die erste Bohrung und die zweite Bohrung verbindenden Interschacht-Bohrung;
**dadurch gekennzeichnet, dass** das Verfahren umfasst
Anordnen eines Gehäuses oder eines Rohres (112) innerhalb der Interschacht-Bohrung;
Perforieren des Interschacht-Gehäuses oder -Rohres (112); und
Anordnen eines oder mehrerer Fluidkanäle (114) innerhalb des Interschacht-Gehäuses oder -Rohres, wobei die Fluidkanäle (114) strömungsmäßig mit dem Einspeiseschacht (100) und dem Förderschacht (120) verbunden sind.

2. Verfahren gemäß Anspruch 1, wobei die zweite Teufe geringer als die erste Teufe ist, und wobei die Interschacht-Bohrung in einem Winkel von weniger als 70° in Bezug auf die Horizontale gebohrt wird.

3. Verfahren gemäß Anspruch 1, wobei das erste Wärmeübertragungsfluid Kohlenstoffdioxid, Stickstoff, Ammoniak und/oder Amine mit 1 bis 6 Kohlenstoffatomen, Kohlenwasserstoffe mit 1 bis 8 Kohlenstoffatomen oder Kohlenwasserstoffe mit 1 bis 10 Kohlenstoffatomen umfasst, wobei ein oder mehrere Kohlenwasserstoffe durch Chlor oder Fluor ersetzt sind; und
wobei das zweite Wärmeübertragungsfluid Wasser, Lauge oder Kohlenwasserstoffe umfasst, die unter den Temperatur- und Druckbedingungen der Formation flüssig sein können.

4. Verfahren gemäß Anspruch 1, das des Weiteren das Stimulieren des Fließens des zweiten Wärmeübertragungsfluids innerhalb der geothermisch erwärmten Formation (2200) umfasst.

5. Verfahren gemäß Anspruch 1, das des Weiteren ein Aufrechterhalten des ersten Wärmeübertragungsfluids als überkritisches Fluid während des Energieerzeugungszyklusses umfasst, der die Einspeisung durch den Einspeiseschacht (100), das Erwärmen innerhalb des Interschacht-Rohres, die Zurückgewinnung durch den Förderschacht (120), die Energieerzeugung in der Energieerzeugungseinheit (140) und die Wiedereinspeisung in den Einspeiseschacht (100) umfasst.

6. System zur Energieerzeugung, umfassend:
einen Einspeiseschacht (100) und einen Förderschacht (120), die dazu dienen, ein erstes Wärmeübertragungsfluid einer ein zweites Wärmeübertragungsfluid enthaltenden geothermisch erwärmten Formation (200) zuzuführen und von dieser abzuführen;
eine Interschacht-Durchführung (110), die strömungsmäßig mit dem Einspeiseschacht (100) und dem Förderschacht (120) verbunden ist und strömungsmäßig das erste Wärmeübertragungsfluid von dem zweiten Wärmeübertragungsfluid trennt, wobei die Interschacht-Durchführung (110) in der das zweite Wärmeübertragungsfluid enthaltenden geothermisch erwärmten Formation (200) derart angeordnet ist, das das erste Wärmeübertragungsfluid indirekt durch die geothermisch erwärmte Formation (200) und dem zweiten Wärmeübertragungsfluid erwärmt wird; und
eine Energieerzeugungseinheit (140), die dazu ausgebildet ist, Energie aus dem erwärmten ersten Wärmeübertragungsfluid zu erzeugen,
**dadurch gekennzeichnet, dass**
die Interschacht-Durchführung (110) eine Mehrzahl von innerhalb eines perforierten Gehäuses oder Rohres (112) angeordneten Fluidkanälen (11) aufweist.

7. System gemäß Anspruch 6, wobei die Zirkulation ohne mechanisches Pumpen erfolgt.

8. System gemäß Anspruch 6, wobei das erste
Wärmeübertragungsfluid Kohlenstoffdioxid, Stickstoff, Ammoniak und/oder Amine mit 1 bis 6 Kohlenstoffatomen, Kohlenwasserstoffe mit 1 bis 8 Kohlenstoffatomen oder Kohlenwasserstoffe mit 1 bis 10 Kohlenstoffatomen umfasst, wobei ein oder mehrere Kohlenwasserstoffe durch Chlor oder Fluor ersetzt sind; und
wobei das zweite Wärmeübertragungsfluid Wasser, Lauge oder Kohlenwasserstoffe umfasst, die unter den Temperatur- und Druckbedingungen der Formation flüssig sein können.

9. System gemäß Anspruch 6, wobei die Interschacht-Durchführung (110) sich durch die geothermisch erwärmte Formation in einem Winkel von +70° zur Horizontalen erstreckt.

10. System gemäß Anspruch 6, umfassend zwei oder mehr Einspeiseschächte (314, 320; 412), zwei oder mehr Förderschächte (318, 324; 416) und zwei oder mehr Energieerzeugungseinheiten (310, 312; 410), wobei die Energieerzeugungseinheiten (310, 312; 410) strömungsmäßig über einen Einspeiseschacht (314, 320; 412), eine Interschacht-Durchführung (316, 322; 414) und einen Förderschacht (318, 324; 416) verbunden sind.

11. System gemäß Anspruch 10, das des Weiteren ein Ventilsystem und Steuerungen umfasst, mittels derer eine oder mehrere Energieerzeugungseinheiten (310, 312; 410) strömungsmäßig voneinander getrennt sind.

## Revendications

1. Procédé de production d'énergie, comprenant :
l'injection d'un premier fluide de transfert de chaleur à travers un puits d'injection (100) jusqu'à une formation chauffée de façon géothermique (200) qui contient un second fluide de transfert de chaleur ;
le chauffage du premier fluide de transfert de chaleur par échange de chaleur indirect dans un passage entre puits (110) fluidiquement relié au puits d'injection (100) et disposé à l'intérieur de la formation chauffée de façon géothermique (200) ;
la récupération du premier fluide de transfert de chaleur chauffé par l'intermédiaire d'un puits de production (120) fluidiquement relié au passage entre puits (110) ; et
la conversion de l'énergie thermique contenue dans le premier fluide de transfert de chaleur chauffé récupéré dans une unité de production d'énergie (140) fluidiquement reliée au puits d'injection (100) et au puits de production (120) ;
dans lequel le procédé comprend en outre :
le creusement d'un premier forage, depuis la surface du sol jusqu'à une première profondeur à l'intérieur de la formation chauffée de façon géothermique (200), pour le puits d'injection (100) ;
le creusement d'un second forage, depuis la surface du sol jusqu'à une seconde profondeur, pour le puits de production (120) ;
le creusement d'un forage entre puits reliant le premier forage et le second forage ;
**caractérisé en ce que** le procédé comprend
la mise en place d'un cuvelage ou d'un tuyau (112) à l'intérieur du forage entre puits ;
la perforation du cuvelage ou du tuyau entre puits (112) ; et
la mise en place d'un ou de plusieurs conduits de fluide (114) à l'intérieur du cuvelage ou du tuyau entre puits, les conduits de fluide (114) reliant fluidiquement le puits d'injection (100) et le puits de production (120).

2. Procédé selon la revendication 1, dans lequel la seconde profondeur est inférieure à la première profondeur, et dans lequel le forage entre puits est creusé suivant un angle de moins de 70 degrés par rapport à l'horizontale.

3. Procédé selon la revendication 1, dans lequel le premier fluide de transfert de chaleur comprend un ou plusieurs de dioxyde de carbone, azote, ammoniac et/ou amines avec un nombre d'atomes de carbone de C1 à C6, des hydrocarbures avec un nombre d'atomes de carbone de C1 à C8, des hydrocarbures avec un nombre d'atomes de carbone de C1 à C10 dans lesquels un ou plusieurs hydrogènes sont remplacés par du chlore ou du fluor ; et dans lequel le second fluide de transfert de chaleur comprend de l'eau, de la saumure, ou des hydrocarbures qui peuvent être liquides dans des conditions de température et de pression de formation.

4. Procédé selon la revendication 1, comprenant en outre la stimulation d'un écoulement du second fluide de transfert de chaleur à l'intérieur de la formation chauffée de façon géothermique (200).

5. Procédé selon la revendication 1, comprenant en outre le maintien du premier fluide de transfert de chaleur en tant que fluide supercritique pendant toute la durée du cycle de production d'énergie, y compris l'injection par l'intermédiaire du puits d'injection (100), le chauffage à l'intérieur du tuyau entre puits, la récupération par l'intermédiaire du puits de production (120), la production d'énergie dans l'unité de production d'énergie (140), et la réinjection dans le puits d'injection (100).

6. Système de production d'énergie, comprenant :
un puits d'injection (100) et un puits de production (120) pour convoyer un premier fluide de transfert de chaleur vers, et à partir d'une formation chauffée de façon géothermique (200) contenant un second fluide de transfert de chaleur ;
un passage entre puits (110) reliant fluidiquement le puits d'injection (100) au puits de production (120) et isolant fluidiquement le premier fluide de transfert de chaleur du second fluide de transfert de chaleur, dans lequel le passage entre puits (110) est disposé dans la formation chauffée de façon géothermique (200) contenant le second fluide de transfert de chaleur de telle sorte que le premier fluide de transfert de chaleur est chauffé indirectement par la formation chauffée de façon géothermique (200) et le second fluide de transfert de chaleur ; et
une unité de production d'énergie (140) configurée pour produire de l'énergie à partir du premier fluide de transfert de chaleur chauffé,
**caractérisé en ce que**
le passage entre puits (110) comprend une pluralité de conduits de fluide (114) disposés à l'intérieur d'un cuvelage ou d'un tuyau perforé (112).

7. Système selon la revendication 6, dans lequel la circulation se fait sans pompage mécanique.

8. Système selon la revendication 6, dans lequel
le premier fluide de transfert de chaleur comprend un ou plusieurs de dioxyde de carbone, azote, ammoniac et/ou amines avec un nombre d'atomes de carbone de C1 à C6, des hydrocarbures avec un nombre d'atomes de carbone de C1 à C8, des hydrocarbures avec un nombre d'atomes de carbone de C1 à C10 dans lesquels un ou plusieurs hydrogènes sont remplacés par du chlore ou du fluor ; et
dans lequel le second fluide de transfert de chaleur comprend de l'eau, de la saumure, ou des hydrocarbures qui peuvent être liquides dans des conditions de température et de pression de formation.

9. Système selon la revendication 6, dans lequel le passage entre puits (110) s'étend à travers la formation chauffée de façon géothermique suivant un angle de ± 70 degrés par rapport à l'horizontale.

10. Système selon la revendication 6, comprenant deux ou plus puits d'injection (314, 320 ; 412), deux ou plus puits de production (318, 324 ; 416), et deux ou plus unités de production d'énergie (310, 312 ; 410),
dans lequel les unités de production d'énergie (310, 312 ; 410) sont couplées fluidiquement par l'intermédiaire d'un puits d'injection (314, 320 ; 412), d'un passage entre puits (316, 322 ; 414), et d'un puits de production (318, 324 ; 416).

11. Système selon la revendication 10, comprenant en outre l'installation et la commande de vannes configurées pour isoler fluidiquement une ou plusieurs unités de production d'énergie (310, 312 ; 410).
